# EUROPEAN PATENT SPECIFICATION

(11) **EP 3 907 712 B1**
(45) Date of publication and mention of the grant of the patent: **30.08.2023**
(21) Application number: 21020249.5
(22) Date of filing: 06.05.2021
(51) Int. Cl.: G08B 13/08, G08B 19/00, B60R 25/30, G08B 17/10, G08B 21/18, G08B 25/08, G08B 25/10

(54) **A DEVICE AND A METHOD FOR COMPLEX SURVEILLANCE OF MOBILE HOUSING OBJECTS**
VORRICHTUNG UND VERFAHREN ZUR KOMPLEXEN ÜBERWACHUNG VON MOBILEN WOHNOBJEKTEN
DISPOSITIF ET PROCÉDÉ DE SURVEILLANCE COMPLEXES D'OBJETS DE BOÎTIER MOBILE

(30) Priority: 06.05.2020 CZ 20203751
(43) Date of publication of application: 10.11.2021
(73) Proprietor: Miare B.V., 3067 KW Rotterdam (NL); Larissa Holding BV, 3067 GH Rotterdam (NL)
(72) Inventor: Provázek, Michal, 779 00 Olomouc (CZ)
(74) Representative: Kendereski, Dusan

(56) References cited:
- WO-A1-2016/150424
- WO-A2-2004/066275
- US-A1- 2009 224 896
- US-A1- 2014 306 814
- "Correspondence of Final ATIS IoT Categorization", TP-2019-0174-CORRESPONDENCE_OF_FINAL_ATIS_ IOT_CATEGORIZATION.ZIP, 16 October 2019 (2019-10-16), - 16 October 2019 (2019-10-16), XP084032508,

## Description

### Field of the Invention

The invention falls within the scope of electronic control systems and relates to a device for ensuring complex surveillance of mobile housing objects, in particular caravans and recreational vehicles, and to a method for implementing said device.

### Background of the Invention

In the field of mobile housing objects, especially caravans, there is a number of systems informing users about the condition of installed devices, such as lighting, water heating, battery status, heating or air conditioning control or security of the object, which also allow setting their parameters. At present, the industrial standard of the Caravanning Industry Association, which uses a single CI-BUS, a Caravanning-Industry-BUS, is used primarily in the field of mobile residential surveillance devices. Solutions using different interfaces for control units are known, for example, the connection of devices using a serial data bus, a CAN-BUS, Controller Area Network, and some solutions use a universal asynchronous serial interface, i. e. UART. Units of an earlier production date are equipped with RS232 or RS485 buses. Many manufacturers of various devices also use 1-wire buses, or local serial digital buses, a LIN-BUS. Surveillance devices also use wireless communication technologies, such as wireless radio data link in ISM band, Bluetooth technology, or use GSM/GPRS mobile communication networks. The individual systems therefore have different means of communication and different ways of connecting to their control unit, and no solution is known that would allow comprehensive supervision of all installed devices of different manufacturers equipped with different communication interfaces and buses and which would therefore be equipped with all commonly used means of communication. However, if a mutual link between the different systems is not established, the optimal functioning of the whole system is not ensured and as much energy and media savings as possible is not possible.

Also, in the field of mobile housing objects, especially recreational vehicles and caravans, there is a number of systems for monitoring or controlling the operation of their residential part, for example disclosed in the Czech utility model CZ 30244 U1. The disadvantage of this solution is that the communication part of the system is characterized by high power and data consumption and low regional compatibility, while not allowing the monitoring of the location of such a controlled mobile housing object.

A system and a method for surveillance in a mobile environment are disclosed in the international patent application WO 2004066275 A2. The system includes a device in accordance with the preamble of claim 1, the device further including a wireless link for transmitting input and output data. The disclosure further specifies the possibility of using an 802.11b protocol (commonly branded as Wi-Fi) or a Bluetooth protocol as an alternative to internal wired connections.

LPWA and GNSS communication systems are known as wide area networks (WANs) according to a publication titled "Correspondence of final ATIS IoT categorization" and published on 16 October 2019 by ATIS (Alliance for telecommunications industry solutions). The GNSS communication system is further disclosed in intelligent transport systems where high speed vehicular mobility is often experienced, such as in vehicle safety or autonomous vehicle applications.

Similar systems are also disclosed in WO 2016150424 A1, US 2009224896 A1 and US 2014306814 A1.

LPWA/GNSS interface arrangements are also known in the prior art, e. g. by Quectel (https://vyvoj.hw.cz/nova-rodina-modulu-Ipwa-s-funkci-gnss.html;
https://www.quectel.com/product/bg77.htm; https://www.quectel.com/product/bg95.htm; available on 6 May 2021).

The aim of the presented invention is to link all information and control signals into one unit, which would ensure the processing of all data in real time and provide the user with information on the status of all devices in one place and allow them to be controlled or set up for automatic control, while at the same time the communication part of the unit would be characterized by low power and data consumption and high regional compatibility, while allowing the monitoring of the location of such controlled mobile housing object.

### Summary of the invention

The above-formulated aim is achieved by a device for complex surveillance of mobile housing objects according to claim 1, the device comprising a control unit including a control microprocessor unit, and data input blocks, data output blocks, a communication interface block and a power supply block connected thereto. The data input blocks, the data output blocks, the communication interface block and the power supply block are connected to the control microprocessor unit in parallel. Optionally, an accelerometer positioning block, and/or a SIM-card block with a connected SIM-slot (SIM = subscriber identity module), and/or an SD-card block with a connected SD-slot (SD = secure digital) are connected to the control microprocessor unit.

The communication interface block comprises at least one wireless communication technology and at least two wired communication interfaces connected to the control microprocessor unit and selected from the group comprising a LIN-BUS bus having a connector (LIN = local interconnect network), a CAN-BUS bus having a connector (CAN = controller area network), a UART bus having a connector (UART = universal asynchronous receiver-transmitter), a USB bus having a connector (USB = universal serial bus), an RS232 bus having a connector (RS232 = recommended standard 232) and an RS485 bus having a connector (RS485 = recommended standard 485).

In addition, the device comprises at least three data input blocks that are provided with connectors for connecting monitored apparatuses and that are selected from the group comprising a battery input block for the status of a vehicle battery, a mains input block for the presence of mains voltage, a solar input block for the presence of solar panel voltage, an ignition input block for the status of an ignition key, a lighting input block for the status of lighting, an alarm input block for alarm signalisation, a temperature input block for measuring external and internal temperature, a water tank input block for clean and waste water levels, as well as the device comprises at least three data output blocks that are provided with connectors for connecting controlled apparatuses and that are selected from the group comprising a waste output block for a waste tank heating element, a pump output block for a water pump, a ventilator output block for a ventilator, an alarm output block for an alarm, a heating output block for independent heating, a lock output block for a door lock controller, a lighting output block for a lighting status controller.

The underlying idea of the invention is the fact that the wireless communication technology of the communication interface block is an LPWA/GNSS interface (LPWA = low-power wide-area; GNSS = global navigation satellite system), which can optionally be supplemented by at least one wireless communication technology selected from the group containing an ISM radio interface (ISM = industrial, scientific and medical) and a Bluetooth interface.

In a basic embodiment, the communication interface block therefore contains the LPWA/GNSS interface, which allows the unit to communicate across an entire spectrum of mobile operator networks in different countries, where IoT (Internet of things) networks are gradually being set up. On the one hand, this interface has higher signal penetration than commonly used GSM/GPRS transmissions (GSM = global system for mobile communications; GPRS = general packet radio service) and at the same time significantly lower power and data consumption, which is mainly reflected in the life of the leisure battery from which the unit is powered. Furthermore, if this module further comprises a GNSS interface, it is possible to determine the location of the mobile housing object and further process this information for further data outputs.

In a preferred embodiment, the communication interface block comprises an ISM radio interface to which a weighing sensor for measuring the weight of a gas bottle is wirelessly connected.

It is also advantageous when at least one device selected from the group comprising a security sensor for a closed door, a cooling sensor for measuring temperature in a refrigerator, a temperature-humidity sensor for measuring temperature, pressure and humidity, a smoke-gas sensor for measuring carbon monoxide concentration and smoke detection, an RFID key (RFID = radio-frequency identification) and between one to ten universal wireless switches is connected to the ISM radio interface.

It is also advantageous when the power supply block is connected to a low-voltage power supply of 12 V having an implemented 230/12 V converter, which power supply is further connected to a vehicle battery, a mains power supply and a leisure battery, wherein the vehicle battery is further connected to the control microprocessor unit via the battery input block and a mains sensor for the presence of mains voltage is connected to an output of the mains power supply, which sensor is connected to the control microprocessor unit via the mains input block.

Finally, it is advantageous when at least one mobile device equipped with a communication mobile application, and/or at least one remote computer equipped with a computer program and/or a communication web application is wirelessly connected to the Bluetooth interface and/or the LPWA/GNSS interface.

Furthermore, the above-formulated aim is achieved by a method for complex surveillance of mobile housing objects according to claim 7, optionally according to claims 8 to 13.

The advantage of communication via the LPWA/GNSS interface is the saving of power, data and media, together with optimal security of the whole object and allowing the monitoring of the location of such a controlled mobile housing object. At the same time, it is possible to control a mobile housing object remotely from a remote computer (e. g. from a dispatching centre at a rental facility), as well as it can be controlled from the mobile application by a user of the mobile housing object. The LPWA interface is coupled with the GNSS interface, which transmits the location and thus creates a logbook with a history of movement and a dispatching map where individual mobile housing objects are located (storing data e. g. in an SQL database). In addition, the LPWA/GNSS interface can offer remote assistance to users of a mobile housing object in case of problems outside the rental facility, as well as remote control of the preparation and takeover of a mobile housing object, while remotely checking e. g. the condition of batteries, water tanks, gas cylinders, temperatures, voltage connections, fuel tank, etc. In addition, service intervals, maintenance, usage statistics of specific functionalities of the mobile housing object, fuel card, travel services, parking or mooring, on-line reservations and billing or chat with users can be remotely controlled or enquired.

The advantage of the Bluetooth interface according to claim 8, when communicating with a mobile device is its proximity range, and thus the possibility of omitting additional communication links in the transmission chain (such as a message exchange centre) if only near-by control is required by the user.

The advantage of requesting input data collection according to claim 11 is that the device does not have to be constantly in communication with the mobile device and/or the remote computer (so-called lower data and power consumption), which is feasible only for LPWA network, e. g. of Narrowband IoT or LTE-M type, where e. g. UDP network protocol is used.

Furthermore, the above-formulated aim is achieved by a computer program [product] according to claim 14 and by a data carrier or a signal thereof according to claim 15.

The new invention achieves an improved effect in that a mutual link is established between the different systems of the mobile housing object, thus achieving optimal functioning of the whole system and ensuring the greatest possible savings in power, data and media, together with optimal security of the whole object and allowing the monitoring of the location of such a controlled mobile housing object.

### Description of the Drawings

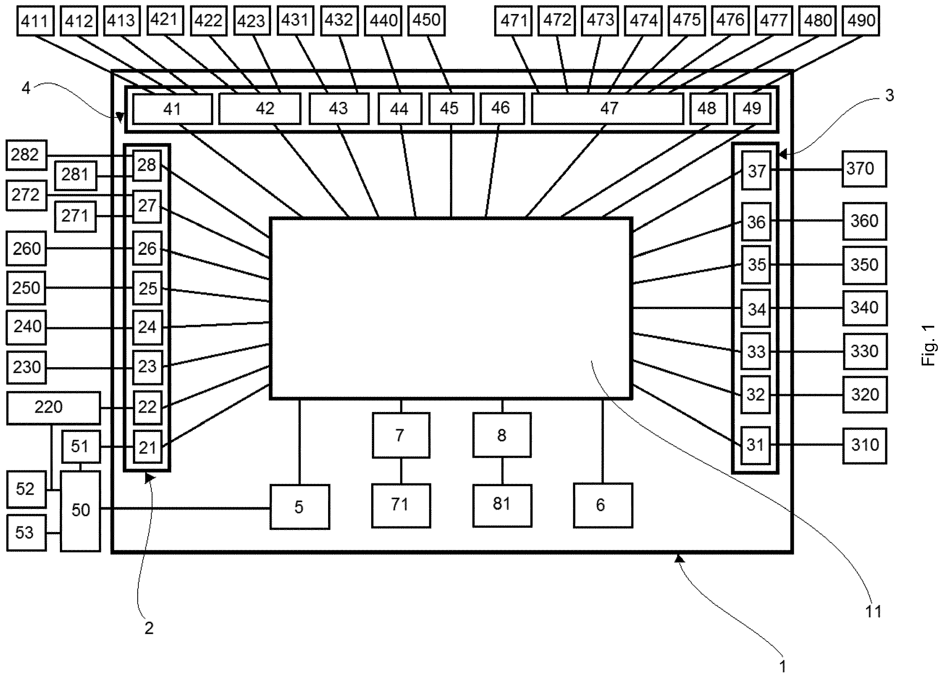

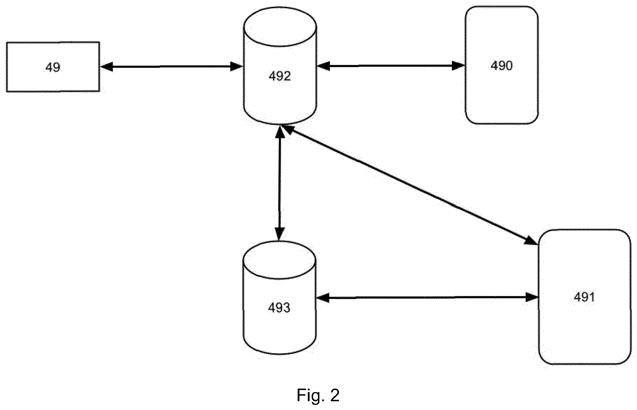

A specific example of the invention is schematically shown in the attached drawings showing the overall connection of the device to ensure complex surveillance of mobile housing objects (Fig. 1) and the method of transmitting data via the LPWA/GNSS interface (Fig. 2).

The drawings depicting the present invention and the examples of particular embodiments described below in no way limit the scope of protection specified in the definition, but only clarify the subject-matter of the invention.

### Examples of the Invention

The device for ensuring complex surveillance of mobile housing objects is implemented as part of a surveillance system comprising a control unit 1, which includes a control microprocessor unit 11 to which data input blocks 2, data output blocks 3, a communication interface block 4, a power supply block 5, an accelerometer positioning block 6, a SIM-card block 7 with a connected SIM slot 71 fitted with a SIM card (not shown) and an SD-card block 8 with a connected SD slot 81 fitted with an SD card (not shown) are connected in parallel. The control microprocessor unit 11 is connected via the power supply block 5 to a low voltage power supply 50 of 12 V with an implemented 230/12 V converter (not shown), which is connected to a vehicle battery 51, a mains power supply 52 of 230 V and a leisure battery 53. A mains sensor 220 of the presence of mains voltage is further connected to an unmarked output of the mains power supply 52, which sensor is connected to the control microprocessor unit 11 via a mains input block 22. The vehicle battery 51 is further connected to the control microprocessor unit 11 via a battery input block 21.

Individual monitored apparatuses are further connected to the data input blocks 2 via connectors (not shown) as follows: a solar sensor 230 for the presence of solar panel voltage is connected to a solar input block 23, a detector 240 for the status of an ignition key is connected to an ignition input block 24, at least one lighting sensor 250 for the status of lighting is connected to a lighting input block 250, at least one alarm sensor 260 is connected to an alarm input block 26, an external temperature sensor 271 and an internal temperature sensor 272 are connected to a temperature input block 27, a waste water level meter 281 and a clean water level meter 282 are connected to a water tank input block 28.

Individual controlled devices are connected to the data output blocks 3 via connectors (not shown) as follows: A waste tank heating element 310 is connected to a waste output block 310 for heating of a waste tank, a water pump 320 is connected to a pump output block 32, a ventilator 330 is connected to a ventilator output block 33, an alarm 340 is connected to an alarm output block 344, independent heating 350 is connected to a heating output block 35, a door lock controller 360 is connected to a lock output block 36, at least one lighting status controller 370 is connected to a lighting output block 37.

The communication interface block 4 comprises the following wired communication interfaces connected to the control microprocessor unit 11 and connected to the monitored and controlled devices: a LIN-BUS bus 41 having a connector connected to heating 411, air conditioning 412 and a boiler 413; a CAN-BUS bus 42 having a connector connected to an air sensor 421 for external air status, a touch panel 422 and an infrared access interface 423; a UART bus 43 having a connector connected to a naviceiver 431 and a heating unit 432; an RS232 bus 44 having a connector connected to a touch display unit 440; an RS485 bus 45 having a connector connected to a power supply 450; a USB bus 46 having a connector.

The communication interface block 4 also comprises the following wireless communication technologies connected to the control microprocessor unit 11 and connected to the monitored and controlled devices: an ISM radio interface 47, to which a weighing sensor 471 for measuring the weight of a gas bottle, at least one security sensor 472 for a closed door, a cooling sensor 473 for measuring temperature in a refrigerator, a temperature-humidity sensor 474 for measuring temperature, pressure and humidity, a smoke-gas sensor 475 for measuring carbon monoxide concentration and smoke detection, an RFID key 476 and one to ten universal wireless switches 477 are connected in parallel; a Bluetooth interface 48, to which at least one first mobile device 480 is connected via a mobile application (not shown); an LPWA/GNSS interface 49, to which at least one second mobile device 490 and/or a remote computer 491 (not shown in Figure 1) and/or a general external antenna are connected via a message exchange centre 492.

The SIM card is used via the SIM-card block 8 by the control microprocessor unit 11 for telephone communications performed on telephone operator lines, which are carried out using the LPWA/GNSS interface 49.

The control microprocessor unit 11 informs the user, using the touch display unit 441 and the mobile application on the mobile device 480, 490 which is connected to the control microprocessor unit 11 optionally via the Bluetooth interface 48 or the LPWA/GNSS interface 49, about the status of the individual connected devices which are also controlled by means of a mobile application in the mobile device 480, 490 and by means of the touch panel 422. Using the LPWA/GNSS interface 49, the mobile device 490 communicates via the message exchange centre 492. In addition, the remote computer 491 can be connected to the control microprocessor unit 11 via the LPWA/GNSS interface 49 and the message exchange centre 492, see Figure 2.

The control microprocessor unit 11 detects the tilt of a mobile residential object by means of the accelerometer positioning block 6.

In the event of a non-standard event or a crisis situation, such as fire, unauthorised intrusion of a foreign person, gas leakage and the like, which is captured by sensors of the installed equipment, the control microprocessor unit 11 evaluates input data from the connected monitored devices and sends SMS information on the nature of the detected event to the paired mobile devices 480, 490 or to the remote computer 491, together with the display of a notification on the mobile application of the mobile device 480, 490, while at the same time taking appropriate measures corresponding to the nature of the non-standard event, such as starting a horn inside the object, launching ventilation of the interior space, and so on. After displaying the notification of the event by a mobile application or a web application or a computer program, the user may take certain measures themselves by sending an appropriate command to perform the requested action of a specific device connected to the control microprocessor unit 11.

The sequence of steps in the method for providing complex surveillance of mobile housing objects by means of the LPWA/GNSS interface 49 is as follows (see Figure 2):
a. providing a device for complex surveillance of mobile housing objects, the device comprising the control unit 1 including the control microprocessor unit 11 and at least three data input blocks 2 connected thereto (blocks 21-28 and devices 220, 230, 240, 250, 260, 271, 272, 281 and/or 282), at least three data output blocks 3 connected thereto (blocks 31-37 and devices 310, 320, 330, 340, 350, 360 and/or 370), the communication interface block 4 connected thereto (bus/interface 41-47 and devices 411-413, 421-423, 431-432, 440, 450 and/or 471-477), the power block 5 connected thereto (blocks 50-53) and optionally the accelerometer positioning block 6 connected thereto, wherein the communication interface block 4 comprises a wireless communication technology in the form of the LPWA/GNSS interface 49 and at least two communication interfaces connected to the control microprocessor unit 11and selected from the group comprising the LIN-BUS bus 11 having a connector, the CAN-BUS bus 42 having a connector, the UART bus 43 having a connector, the USB bus 46 having a connector, the RS232 bus 44 having a connector and the RS485 bus 45 having a connector, and optionally further the ISM radio interface 47 - preferably it is the device according to the invention, described above and in claims 1 to 6 below;
b. collecting input data from at least one data input block 2 and/or from at least one communication interface of the communication interface block 4 and/or optionally from the accelerometer positioning block 6 to the control microprocessor unit 11;
c. transmitting in a wireless manner the input data from the control microprocessor unit 11 via the LPWA/GNSS interface 49 to the message exchange centre 492 (e. g. using a UDP network protocol), and further to at least one mobile device 490 equipped with a mobile application and/or to at least one remote computer 491 equipped with a computer program or a web application (e. g. using a TCP/IP network protocol);
d. displaying the input data in the mobile device 490 and/or in the remote computer 491 and based on the input data, creating output data in the mobile device 490 by means of the mobile application and/or in the remote computer 491 by means of the computer program or the web application;
e. transmitting in a wireless manner the output data from the mobile device 490 and/or from the remote computer 491 to the message exchange centre 492, and further via the LPWA/GNSS interface 49 to the control microprocessor unit 11; and
f. transmitting the output data from the control microprocessor unit 11 to at least one data output block 3 and/or to at least one communication interface of the communication interface block 1, thereby activating at least one data output block 3 and/or to at least one communication interface of the communication interface block 4.

Activation in step f. means that at least one of the blocks 31-37 and the devices 310, 320, 330, 340, 350, 360 and/or 370, or the communication interface block 4 and at least one of the bus/interfaces 41-47 and the devices 411-413, 421-423, 431-432, 440, 450 and/or 471-477 perform their function.

The wireless transmission in steps c. and e. between the message exchange centre 492 and the remote computer 491 may include storing input and/or output data in a database 493, preferably in an SQL database.

The sequence of steps in the method for providing complex surveillance of mobile housing objects by means of the Bluetooth interface 48 differs only in step c., when the input data are wirelessly transmitted from the control microprocessor unit 11 via the Bluetooth interface 48 to at least one mobile device 480 equipped with a mobile application, and in step e., when the output data are wirelessly transmitted in the opposite direction. The control microprocessor unit 11 can be equipped with a First In - First Out (FIFO) stack, so requests from the LPWA/GNSS and Bluetooth interfaces are handled sequentially to avoid command conflicts.

In any case, the input data may include data about the location of said device, wherein the data can be transmitted via the LPWA/GNSS interface 49.

The wireless transmission of the input data from the control microprocessor unit 11 to the mobile device 480, 490 and/or the remote computer 491 in step c. may occur on the basis of:
a. a request for collecting input data sent from the mobile device 480, 490 and/or the remote computer 491 (e. g. if the user or dispatcher wishes to check the condition of the mobile housing object or to control it remotely);
b. an automatic setting of periodic transmission of the input data (e. g. when the mobile housing object is in motion and its location is sent to the dispatching centre via the GNSS interface, e. g. in the order of minutes or hours (e. g. every 1 minute));
c. a warning signal of an emergency mode contained in the input data (e. g. if a non-standard event or a crisis situation occurs, e. g. fire, unauthorised intrusion of a foreign person, gas leakage or theft of the mobile housing object).

The above-disclosed method for providing complex surveillance of mobile housing objects by means of the LPWA/GNSS interface 49 or the Bluetooth interface 48 is operable by a computer program (a mobile application, a web application) comprising instructions which, when the program is executed by a mobile device 480, 490 and/or a remote computer 491, cause the device for complex surveillance of mobile housing objects in combination with the mobile device 480, 490 and/or the remote computer 491 to carry out the steps of the above-mentioned method. The computer program can be stored on a computer-readable data carrier (e. g. a CD, hard drive, etc.) or it can be carried by a data carrier signal (e. g. in case of downloading the program from the Internet).

### Industrial Applicability

The device for complex surveillance of mobile housing objects is usable in caravans, recreational vehicles, mobile homes, ships and the like to facilitate the monitoring and control of individual devices related to the operation of these objects.

### List of Reference Signs

- 1: control unit
- 11: control microprocessor unit
- 2: data input block
- 21: battery input block the status of a vehicle battery 51
- 22: mains input block for the presence of mains voltage
- 220: mains sensor for the presence of mains voltage
- 23: solar input block for the presence of solar panel voltage
- 230: solar sensor for the presence of solar panel voltage
- 24: ignition input block for the status of an ignition key
- 240: detector for the status of an ignition key
- 25: lighting input block for the status of lighting
- 250: lighting sensor for the status of lighting
- 26: alarm input block for alarm signalisation
- 260: alarm sensor
- 27: temperature input block for measuring external and internal temperature
- 271: external temperature sensor
- 272: internal temperature sensor
- 28: water tank input block for clean and waste water levels
- 281: waste water level meter
- 282: clean water level meter
- 3: data output block
- 31: waste output block for a waste tank heating element 310
- 310: waste tank heating element
- 32: pump output block for a water pump 320
- 320: water pump
- 33: ventilator output block for a ventilator 330
- 330: ventilator
- 34: alarm output block for an alarm 340
- 340: alarm
- 35: heating output block for independent heating 350
- 350: independent heating
- 36: lock output block for a door lock controller 360
- 360: door lock controller
- 37: lighting output block for a lighting status controller 370
- 370: lighting status controller
- 4: communication interface block
- 41: LIN-BUS bus
- 411: heating
- 412: air-conditioning
- 413: boiler
- 42: CAN-BUS bus
- 421: air sensor for external air status
- 422: touch panel
- 423: infrared access interface
- 43: UART bus
- 431: naviceiver
- 432: heating unit
- 44: RS232 bus
- 440: touch display unit
- 45: RS485 bus
- 450: power supply
- 46: USB bus
- 47: ISM radio interface
- 471: weighing sensor for measuring the weight of a gas bottle
- 472: security sensor for a closed door
- 473: cooling sensor for measuring temperature in a refrigerator
- 474: temperature-humidity sensor for measuring temperature, pressure and humidity
- 475: smoke-gas sensor for measuring carbon monoxide concentration and smoke detection
- 476: RFID key
- 477: universal wireless switch
- 48: Bluetooth interface
- 480: first mobile device
- 49: LPWA/GNSS interface
- 490: second mobile device
- 491: remote computer
- 492: message exchange centre
- 493: database
- 5: power supply block
- 50: low-voltage power supply
- 51: vehicle battery
- 52: mains power supply
- 53: leisure battery
- 6: accelerometer positioning block
- 7: SIM-card block
- 71: SIM-slot
- 8: SD-card block
- 81: SD-slot

## Claims

1. A device for complex surveillance of mobile housing objects, the device comprising a control unit (1) including a control microprocessor unit (11) and data input blocks (2), data output blocks (3), a communication interface block (4) and a power supply block (5) connected thereto,
wherein the data input blocks (2), the data output blocks (3), the communication interface block (4) and the power supply block (5) are connected to the control microprocessor unit (11) in parallel,
wherein optionally an accelerometer positioning block (6), and/or a SIM-card block (7) with a connected SIM-slot (71), and/or an SD-card block (8) with a connected SD-slot (81) are connected to the control microprocessor unit (11),
wherein the communication interface block (4) comprises at least one wireless communication technology and at least two wired communication interfaces connected to the control microprocessor unit (11) and selected from the group comprising a LIN-BUS bus (41) having a connector, a CAN-BUS bus (42) having a connector, a UART bus (43) having a connector, a USB bus (46) having a connector, an RS232 bus (44) having a connector and an RS485 bus (45) having a connector,
wherein the device comprises at least three data input blocks (2) that are provided with connectors for connecting monitored apparatuses and that are selected from the group comprising a battery input block (21) for the status of a vehicle battery (51), a mains input block (22) for the presence of mains voltage, a solar input block (23) for the presence of solar panel voltage, an ignition input block (24) for the status of an ignition key, a lighting input block (25) for the status of lighting, an alarm input block (26) for alarm signalisation, a temperature input block (27) for measuring external and internal temperature, a water tank input block (28) for clean and waste water levels,
wherein the device comprises at least three data output blocks (3) that are provided with connectors for connecting controlled apparatuses,
**characterised in that** at least three data output blocks (3) are selected from the group comprising a waste output block (31) for a waste tank heating element (310), a pump output block (32) for a water pump (320), a ventilator output block (33) for a ventilator (330), an alarm output block (34) for an alarm (340), a heating output block (35) for independent heating (350), a lock output block (36) for a door lock controller (360), a lighting output block (37) for a lighting status controller (370),
and **in that** the wireless communication technology of the communication interface block (4) is an LPWA/GNSS interface (49).

2. The device according to claim 1, **characterised in that** the communication interface block (4) further comprises at least one wireless communication technology selected from the group comprising an ISM radio interface (47) and a Bluetooth interface (48).

3. The device according to claim 1 or 2, **characterised in that** the communication interface block (4) comprises the ISM radio interface (47) to which a weighing sensor (471) for measuring the weight of a gas bottle is wirelessly connected.

4. The device according to any of claims 1 to 3, **characterised in that** the communication interface block (4) comprises the ISM radio interface (47) to which at least one device selected from the group comprising a security sensor (472) for a closed door, a cooling sensor (473) for measuring temperature in a refrigerator, a temperature-humidity sensor (474) for measuring temperature, pressure and humidity, a smoke-gas sensor (475) for measuring carbon monoxide concentration and smoke detection, an RFID key (476) and between one to ten universal wireless switches (477) is connected.

5. The device according to any of the preceding claims, **characterised in that** the power supply block (5) is connected to a low-voltage power supply (50) of 12 V having an implemented 230/12 V converter, which power supply is further connected to a vehicle battery (51), a mains power supply (52) and a leisure battery (53), wherein the vehicle battery (51) is further connected to the control microprocessor unit (11) via the battery input block (21) and a mains sensor (220) for the presence of mains voltage is connected to an output of the mains power supply (52), which sensor is connected to the control microprocessor unit (11) via the mains input block (22).

6. The device according to any of the preceding claims, **characterised in that** at least one mobile device (480, 490) equipped with a communication mobile application, and/or at least one remote computer (491) equipped with a computer program and/or a communication web application is wirelessly connectable to the Bluetooth interface (48) and/or the LPWA/GNSS interface (49).

7. A method for complex surveillance of mobile housing objects, **characterised in that** it comprises the following steps:
a. providing a device for complex surveillance of mobile housing objects, the device comprising a control unit (1) including a control microprocessor unit (11) and at least three data input blocks (2), at least three data output blocks (3), a communication interface block (4), a power supply block (5) and optionally an accelerometer positioning block (6) connected thereto, wherein the communication interface block (4) comprises a wireless communication technology in the form of an LPWA/GNSS interface (49) and at least two communication interfaces connected to the control microprocessor unit (11) and selected from the group comprising a LIN-BUS bus (41) having a connector, a CAN-BUS bus (42) having a connector, a UART bus (43) having a connector, a USB bus (46) having a connector, an RS232 bus (44) having a connector and an RS485 bus (45) having a connector, and optionally further an ISM radio interface (47);
b. collecting input data from at least one data input block (2) and/or from at least one communication interface of the communication interface block (4) and/or optionally from the accelerometer positioning block (6) to the control microprocessor unit (11);
c. transmitting in a wireless manner the input data from the control microprocessor unit (11) via the LPWA/GNSS interface (49) to a message exchange centre (492), and further to at least one mobile device (490) equipped with a mobile application and/or to at least one remote computer (491) equipped with a computer program or a web application;
d. displaying the input data in the mobile device (490) and/or in the remote computer (491) and based on the input data, creating output data in the mobile device (490) by means of the mobile application and/or in the remote computer (491) by means of the computer program or the web application;
e. transmitting in a wireless manner the output data from the mobile device (490) and/or from the remote computer (491) to the message exchange centre (492), and further via the LPWA/GNSS interface (49) to the control microprocessor unit (11); and
f. transmitting the output data from the control microprocessor unit (11) to at least one data output block (3) and/or to at least one communication interface of the communication interface block (4), thereby activating at least one data output block (3) and/or to at least one communication interface of the communication interface block (4).

8. The method according to claim 7, **characterised in that** it comprises the following steps:
a. providing the device for complex surveillance of mobile housing objects, wherein the communication interface block (4) further comprises a wireless communication technology in the form of a Bluetooth interface (48);
c. transmitting in a wireless manner the input data from the control microprocessor unit (11) via the Bluetooth interface (48) to at least one mobile device (480) equipped with a mobile application;
e. transmitting in a wireless manner the output data from the mobile device (480) via the Bluetooth interface (48) to the control microprocessor unit (11); and

9. The method according to claim 7, **characterised in that** the input data and/or the output data are stored in a database (493), preferably an SQL database, when they are transmitted in a wireless manner between the message exchange centre (492) and the remote computer (491) in the steps c. and/or e.

10. The method according to any of claims 7 or 9, **characterised in that** the input data according to step b. of claim 7 further comprise positioning data of the device for complex surveillance of mobile housing objects and are transmitted according to step c. of claim 7.

11. The method according to any of claims 7 to 10, **characterised in that** a request for input data collection according to step b. of claim 7 or 8, or optionally of claim 10 is transmitted in a wireless manner before step b. of claim 7 from the mobile device (490) and/or from the remote computer (491) to the message exchange centre (492), and further via the LPWA/GNSS interface (49) to the control microprocessor unit (11), or before step b. of claim 8 from the mobile device (480) via the Bluetooth interface (48) to the control microprocessor unit (11).

12. The method according to any of claims 7 to 10, **characterised in that** transmission of the input data according to step c. of claim 7 or 8, or optionally of claim 10, is performed automatically periodically or provided that the input data include a warning signal of emergency mode.

13. The method according to any of claims 7 to 12, **characterised in that** the data input blocks (2) are selected from the group comprising a battery input block (21) for the status of a vehicle battery (51), a mains input block (22) for the presence of mains voltage, a solar input block (23) for the presence of solar panel voltage, an ignition input block (24) for the status of an ignition key, a lighting input block (25) for the status of lighting, an alarm input block (26) for alarm signalisation, a temperature input block (27) for measuring external and internal temperature, a water tank input block (28) for clean and waste water levels,
wherein the data output blocks (3) are selected from the group comprising a waste output block (31) for a waste tank heating element (310), a pump output block (32) for a water pump (320), a ventilator output block (33) for a ventilator (330), an alarm output block (34) for an alarm (340), a heating output block (35) for independent heating (350), a lock output block (36) for a door lock controller (360), a lighting output block (37) for a lighting status controller (370),
wherein if said bus (41-45) or the ISM radio interface (47) is present, any of heating (411), air-conditioning (412) and/or a boiler (413) is connected to the LIN-BUS bus (41), wherein any of an air sensor (421) for external air status, a touch panel (422) and/or an infrared access interface (423) is connected to the CAN-BUS bus (42), wherein any of a naviceiver (431) and/or a heating unit (432) is connected to the UART bus (43), wherein a touch display unit (440) is connected to the RS232 bus (44), wherein a power supply (450) is connected to the RS485 bus (45), wherein any of a weighing sensor (471) for measuring the weight of a gas bottle, at least one security sensor (472) for a closed door, a cooling sensor (473) for measuring temperature in a refrigerator, a temperature-humidity sensor (474) for measuring temperature, pressure and humidity, a smoke-gas sensor (475) for measuring carbon monoxide concentration and smoke detection, an RFID key (476) and a universal wireless switch (477) is connected to the ISM radio interface (47).

14. A computer program [product] comprising instructions which, when the program is executed by a mobile device (480, 490) and/or a remote computer (491), cause the device for complex surveillance of mobile housing objects in combination with the mobile device (480, 490) and/or the remote computer (491) to carry out the steps b. to f. of the method according to claim 7 or 8, and optionally the steps b. to f. of the method according to any of claims 9 to 13.

15. A computer-readable data carrier or a signal thereof, having stored thereon or carrying the computer program [product] according to claim 14.

## Patentansprüche

1. Vorrichtung zur komplexen Überwachung mobiler Wohnobjekte, umfassend Steuereinheit (1) einschließlich einer Steuer-Mikroprozessoreinheit (11) und Dateneingabeblöcken (2), Datenausgabeblöcke (3), einen Kommunikationsschnittstellenblock (4) und einen Stromversorgungsblock (5) damit verbunden, wobei die Dateneingabeblöcke (2), die Datenausgabeblöcke (3), die Kommunikation Der Schnittstellenblock (4) und der Stromversorgungsblock (5) sind mit der Steuerung verbunden Mikroprozessoreinheit (11) parallel geschaltet, wobei optional ein Beschleunigungsmesser-Positionierungsblock (6) und/oder ein SIM-Kartenblock (7) mit angeschlossenem SIM-Slot (71) und/oder einem SD-Kartenblock (8) mit angeschlossenem SD-Slot (81) sind mit der Steuer-Mikroprozessoreinheit (11) verbunden, wobei der Kommunikationsschnittstellenblock (4) mindestens eine drahtlose Schnittstelle umfasst Kommunikationstechnik und mindestens zwei kabelgebundene Kommunikationsschnittstellen mit der Steuer-Mikroprozessoreinheit (11) verbunden und aus der Gruppe ausgewählt umfassend einen LIN-BUS-Bus (41) mit einem Stecker, einen CAN-BUS-Bus (42) mit einem Anschluss, ein UART-Bus (43) mit einem Anschluss, ein USB-Bus (46) mit einem Anschluss, einen RS232-Bus (44) mit einem Stecker und einen RS485-Bus (45) mit einem Stecker, wobei die Vorrichtung mindestens drei vorgesehene Dateneingabeblöcke (2) umfasst mit Anschlüssen zum Anschluss überwachter Geräte und die aus der ausgewählt werden Gruppe bestehend aus einem Batterieeingangsblock (21) für den Status einer Fahrzeugbatterie (51), Netzeingangsblock (22) für das Vorhandensein von Netzspannung, einen Solareingangsblock (23) für das Vorhandensein von Solarpanelspannung, ein Zündeingangsblock (24) für den Status eines Zündschlüssel, einen Beleuchtungseingangsblock (25) für den Status der Beleuchtung, einen Alarmeingangsblock (26) zur Alarmsignalisierung, ein Temperatureingangsblock (27) zur Messung externer und Innentemperatur, einen Wassertank-Eingangsblock (28) für Frisch- und Abwasserpegel, wobei die Vorrichtung mindestens drei vorgesehene Datenausgabeblöcke (3) umfasst mit Anschlüssen zum Anschluss gesteuerter Geräte, **dadurch gekennzeichnet, dass** aus der Gruppe mindestens drei Datenausgabeblöcke (3) ausgewählt werden umfassend einen Abfallausgangsblock (31) für ein Heizelement (310) des Abfalltanks und eine Pumpe Ausgangsblock (32) für eine Wasserpumpe (320), ein Ventilator-Ausgangsblock (33) für einen Ventilator (330), einen Alarmausgangsblock (34) für einen Alarm (340), einen Heizausgangsblock (35) für unabhängige Heizung (350), ein Verriegelungsausgangsblock (36) für eine Türverriegelungssteuerung (360), Beleuchtungsausgangsblock (37) für einen Beleuchtungsstatusregler (370) und darin die drahtlose Kommunikationstechnologie der Kommunikationsschnittstelle Block (4) ist eine LPWA/GNSS-Schnittstelle (49).

2. Vorrichtung nach Anspruch 1, **dadurch gekennzeichnet, dass** die Kommunikationsschnittstelle Block (4) umfasst außerdem mindestens eine ausgewählte drahtlose Kommunikationstechnologie aus der Gruppe bestehend aus einer ISM-Funkschnittstelle (47) und einer Bluetooth-Schnittstelle (48).

3. Vorrichtung nach Anspruch 1 oder 2, **dadurch gekennzeichnet, dass** die Kommunikation Der Schnittstellenblock (4) umfasst die ISM-Funkschnittstelle (47), an die ein Wägesensor angeschlossen ist (471) zur Messung des Gewichts einer Gasflasche ist drahtlos verbunden.

4. Vorrichtung nach einem der Ansprüche 1 bis 3, **dadurch gekennzeichnet, dass** die Der Kommunikationsschnittstellenblock (4) umfasst die ISM-Funkschnittstelle (47), zu der at mindestens ein Gerät, ausgewählt aus der Gruppe, umfassend einen Sicherheitssensor (472) für geschlossene Tür, ein Kühlsensor (473) zum Messen der Temperatur in einem Kühlschrank, Temperatur-Feuchte-Sensor (474) zur Messung von Temperatur, Druck und Luftfeuchtigkeit, ein Rauchgassensor (475) zur Messung der Kohlenmonoxidkonzentration und Raucherkennung, einen RFID-Schlüssel (476) und zwischen ein und zehn universelle Funkgeräte Schalter (477) angeschlossen ist.

5. Vorrichtung nach einem der vorhergehenden Ansprüche, **dadurch gekennzeichnet, dass** der Strom Der Versorgungsblock (5) ist an ein Niederspannungsnetzteil (50) von 12 V angeschlossen implementierter 230/12 V-Konverter, dessen Stromversorgung weiter an ein Fahrzeug angeschlossen wird Batterie (51), eine Netzstromversorgung (52) und eine Freizeitbatterie (53), wobei das Fahrzeug Die Batterie (51) ist außerdem über die Batterie mit der Steuer-Mikroprozessoreinheit (11) verbunden Eingangsblock (21) und einem Netzsensor (220) für das Vorhandensein von Netzspannung ist mit einem Ausgang der Netzstromversorgung (52) verbunden, an den der Sensor angeschlossen ist der Steuer-Mikroprozessoreinheit (11) über den Netzeingangsblock (22).

6. Vorrichtung nach einem der vorhergehenden Ansprüche, **dadurch gekennzeichnet, dass** mindestens ein mobiles Gerät (480, 490), das mit einer mobilen Kommunikationsanwendung ausgestattet ist und/oder mindestens einen entfernten Computer (491), der mit einem Computerprogramm ausgestattet ist und/oder Eine Kommunikations-Webanwendung ist drahtlos mit der Bluetooth-Schnittstelle verbindbar (48) und/oder die LPWA/GNSS-Schnittstelle (49).

7. Verfahren zur komplexen Überwachung mobiler Wohnobjekte, **dadurch gekennzeichnet** es umfasst die folgenden Schritte:
a. Bereitstellung einer Vorrichtung zur komplexen Überwachung mobiler Wohnobjekte, die Gerät mit einer Steuereinheit (1) einschließlich einer Steuer-Mikroprozessoreinheit (11) und mindestens drei Dateneingabeblöcke (2), mindestens drei Datenausgabeblöcke (3), a Kommunikationsschnittstellenblock (4), einem Stromversorgungsblock (5) und optional einem Beschleunigungsmesser-Positionierungsblock (6), der damit verbunden ist, wobei der Der Kommunikationsschnittstellenblock (4) umfasst eine drahtlose Kommunikation Technologie in Form einer LPWA/GNSS-Schnittstelle (49) und mindestens zwei Kommunikationsschnittstellen, die mit der Steuer-Mikroprozessoreinheit (11) verbunden sind und ausgewählt aus der Gruppe bestehend aus einem LIN-BUS-Bus (41) mit a Anschluss, einen CAN-BUS-Bus (42) aufweisend, einen Anschluss, einen UART-Bus (43) aufweisend einen Anschluss, einen USB-Bus (46) mit einem Anschluss, einen RS232-Bus (44) mit Steckverbinder und einem RS485-Bus (45) mit Steckverbinder und optional weiteren eine ISM-Funkschnittstelle (47);
b. Sammeln von Eingabedaten von mindestens einem Dateneingabeblock (2) und/oder von mindestens eine Kommunikationsschnittstelle des Kommunikationsschnittstellenblocks (4) und/oder optional vom Beschleunigungssensor-Positionierungsblock (6) zur Steuerung Mikroprozessoreinheit (11);
c. Die Eingabedaten der Steuerung drahtlos übertragen Mikroprozessoreinheit (11) über die LPWA/GNSS-Schnittstelle (49) an eine Nachricht weiter Austauschzentrum (492) und weiter zu mindestens einem mobilen Gerät (490) ausgestattet mit einer mobilen Anwendung und/oder an mindestens einen Remote-Computer (491) mit einem Computerprogramm oder einer Webanwendung ausgestattet;
d. Anzeigen der Eingabedaten im mobilen Gerät (490) und/oder in der Fernbedienung Computer (491) und erstellt auf der Grundlage der Eingabedaten Ausgabedaten im Mobiltelefon
Gerät (490) mittels der mobilen Anwendung und/oder im Remote-Computer (491) mittels des Computerprogramms oder der Webanwendung;
e. Drahtloses Übertragen der Ausgabedaten vom Mobilgerät (490)
und/oder vom entfernten Computer (491) zum Nachrichtenaustauschzentrum (492),
und weiter über die LPWA/GNSS-Schnittstelle (49) zum Steuermikroprozessor Einheit (11); und
f. Übertragen der Ausgangsdaten von der Steuer-Mikroprozessoreinheit (11) an mindestens einem Datenausgabeblock (3) und/oder an mindestens eine Kommunikationsschnittstelle des Kommunikationsschnittstellenblock (4), wodurch mindestens ein Datenausgang aktiviert wird Block (3) und/oder an mindestens eine Kommunikationsschnittstelle der Kommunikation Schnittstellenblock (4).

8. Verfahren nach Anspruch 7, **dadurch gekennzeichnet, dass** es Folgendes umfasst Schritte:
a. Bereitstellung des Geräts zur komplexen Überwachung mobiler Wohnobjekte,
wobei der Kommunikationsschnittstellenblock (4) außerdem eine drahtlose Schnittstelle umfasst Kommunikationstechnologie in Form einer Bluetooth-Schnittstelle (48);
c. die Eingabedaten der Steuerung drahtlos übertragen
Mikroprozessoreinheit (11) über die Bluetooth-Schnittstelle (48) mit mindestens einem Mobiltelefon Gerät (480), ausgestattet mit einer mobilen Anwendung;
e. Drahtloses Übertragen der Ausgabedaten vom Mobilgerät (480)
über die Bluetooth-Schnittstelle (48) zur Steuer-Mikroprozessoreinheit (11); und

9. Verfahren nach Anspruch 7, **dadurch gekennzeichnet, dass** die Eingabedaten und/oder die Ausgabedaten werden in einer Datenbank (493), vorzugsweise einer SQL-Datenbank, gespeichert, wenn sie werden drahtlos zwischen der Nachrichtenaustauschzentrale (492) und der Remote-Computer (491) in den Schritten c. und/oder e.

10. Verfahren nach einem der Ansprüche 7 oder 9, **dadurch gekennzeichnet, dass** die Eingabedaten gemäß Schritt b. von Anspruch 7 umfassen weiterhin Positionierungsdaten des Geräts für komplexe Überwachung mobiler Wohnobjekte und werden schrittweise übermittelt c. von Anspruch 7.

11. Verfahren nach einem der Ansprüche 7 bis 10, **dadurch gekennzeichnet, dass** eine Anfrage z Eingabedatenerfassung gemäß Schritt b. des Anspruchs 7 oder 8, oder gegebenenfalls des Anspruchs 10 ist vor Schritt b drahtlos übertragen werden. von Anspruch 7 vom Mobilgerät (490) und/oder vom entfernten Computer (491) zum Nachrichtenaustauschzentrum (492) und weiter über die LPWA/GNSS-Schnittstelle (49) zur Steuer-Mikroprozessoreinheit (11), oder vor Schritt b. nach Anspruch 8 vom Mobilgerät (480) über die Bluetooth-Schnittstelle (48) an die Steuer-Mikroprozessoreinheit (11).

12. Verfahren nach einem der Ansprüche 7 bis 10, **dadurch gekennzeichnet, dass** Übertragung der Eingabedaten gemäß Schritt c. des Anspruchs 7 oder 8, oder optional des Anspruchs 10, ist wird regelmäßig automatisch durchgeführt oder vorausgesetzt, dass die Eingabedaten eine Warnung enthalten Signal des Notfallmodus.

13. Verfahren nach einem der Ansprüche 7 bis 12, **dadurch gekennzeichnet, dass** die Dateneingabe Blöcke (2) werden aus der Gruppe ausgewählt, die einen Batterieeingangsblock (21) für die umfasst Status einer Fahrzeugbatterie (51), ein Netzeingangsblock (22) für das Vorhandensein von Netz Spannung, ein Solar-Eingangsblock (23) für das Vorhandensein von Solarpanel-Spannung, eine Zündung
Eingangsblock (24) für den Status eines Zündschlüssels, einen Beleuchtungs-Eingangsblock (25) für den Status der Beleuchtung, einen Alarmeingangsblock (26) zur Alarmsignalisierung, einen Temperatureingangsblock (27) zur Messung der Außen- und Innentemperatur, ein Wassertank-Eingangsblock (28) zur Rein- und Abwasserwerte, wobei die Datenausgabeblöcke (3) aus der Gruppe ausgewählt sind, die einen Abfall umfasst Ausgangsblock (31) für ein Fäkalientank-Heizelement (310), einen Pumpenausgangsblock (32) für eine Wasserpumpe (320), einen Ventilatorausgangsblock (33) für einen Ventilator (330), einen Alarm Ausgangsblock (34) für einen Alarm (340), einen Heizausgangsblock (35) für unabhängige Heizung (350), ein Verriegelungsausgangsblock (36) für eine Türverriegelungssteuerung (360), ein Beleuchtungsausgang Block (37) für einen Beleuchtungsstatusregler (370), wobei, wenn der Bus (41-45) oder die ISM-Funkschnittstelle (47) vorhanden ist, keine Erwärmung erfolgt (411), eine Klimaanlage (412) und/oder ein Boiler (413) ist an den LIN-BUS-Bus angeschlossen (41), wobei ein Luftsensor (421) für den Außenluftstatus, ein Touchpanel (422) und/oder eine Infrarot-Zugriffsschnittstelle (423) an den CAN-BUS-Bus (42) angeschlossen ist, wobei ein Naviceiver (431) und/oder eine Heizeinheit (432) mit dem UART verbunden ist Bus (43), wobei eine Touch-Display-Einheit (440) an den RS232-Bus (44) angeschlossen ist, wobei eine Stromversorgung (450) mit dem RS485-Bus (45) verbunden ist, wobei eines von a Wägesensor (471) zur Messung des Gewichts einer Gasflasche, mindestens ein Wertpapier
Sensor (472) für eine geschlossene Tür, ein Kühlsensor (473) zur Messung der Temperatur in einen Kühlschrank, einen Temperatur-Feuchtigkeitssensor (474) zur Temperaturmessung, Druck und Luftfeuchtigkeit, ein Rauchgassensor (475) zur Messung von Kohlenmonoxid Konzentrations- und Raucherkennung, ein RFID-Schlüssel (476) und ein universeller Funkschalter (477) ist mit der ISM-Funkschnittstelle (47) verbunden.

14. Ein Computerprogramm [Produkt], das Anweisungen enthält, die, wenn das Programm ist ausgeführt durch ein mobiles Gerät (480, 490) und/oder einen entfernten Computer (491), bewirken, dass Gerät zur komplexen Überwachung mobiler Wohnobjekte in Kombination mit dem mobiles Gerät (480, 490) und/oder der Remote-Computer (491), um die Schritte auszuführen b. zu f. des Verfahrens nach Anspruch 7 oder 8, und optional die Schritte b. zu f. Des Verfahren nach einem der Ansprüche 9 bis 13.

15. Ein computerlesbarer Datenträger oder ein Signal davon, das darauf gespeichert oder getragen ist das Computerprogramm [Produkt] nach Anspruch 14.

## Revendications

1. Dispositif de surveillance complexe d'objets d'habitation mobiles, le dispositif comprenant un unité de commande (1) comprenant une unité de commande à microprocesseur (11) et des blocs d'entrée de données (2), des blocs de sortie de données (3), un bloc d'interface de communication (4) et un bloc d'alimentation (5) connecté à celui-ci, dans lequel les blocs d'entrée de données (2), les blocs de sortie de données (3), la communication le bloc d'interface (4) et le bloc d'alimentation (5) sont connectés à la commande unité à microprocesseur (11) en parallèle, dans lequel éventuellement un bloc de positionnement d'accéléromètre (6) et/ou un bloc de carte SIM (7) avec une fente SIM connectée (71), et/ou un bloc de carte SD (8) avec une fente SD connectée (81) sont reliés à l'unité de commande à microprocesseur (11), dans lequel le bloc d'interface de communication (4) comprend au moins un réseau sans fil technologie de communication et au moins deux interfaces de communication filaires connecté à l'unité de commande à microprocesseur (11) et sélectionné dans le groupe comprenant un bus LIN-BUS (41) ayant un connecteur, un bus CAN-BUS (42) ayant un connecteur, un bus UART (43) ayant un connecteur, un bus USB (46) ayant un connecteur, un bus RS232 (44) ayant un connecteur et un bus RS485 (45) ayant un connecteur, dans lequel le dispositif comprend au moins trois blocs d'entrée de données (2) qui sont fournis avec des connecteurs pour connecter des appareils surveillés et qui sont choisis parmi les groupe comprenant un bloc d'entrée de batterie (21) pour l'état d'une batterie de véhicule (51), un bloc d'entrée secteur (22) pour la présence de tension secteur, un bloc d'entrée solaire (23) pour la présence de la tension du panneau solaire, un bloc d'entrée d'allumage (24) pour l'état d'un clé de contact, un bloc d'entrée d'éclairage (25) pour l'état de l'éclairage, un bloc d'entrée d'alarme (26) pour la signalisation d'alarme, un bloc d'entrée de température (27) pour la mesure externe et température interne, un bloc d'entrée de réservoir d'eau (28) pour les niveaux d'eau propre et d'eau usée, dans lequel le dispositif comprend au moins trois blocs de sortie de données (3) qui sont fournis avec des connecteurs pour le raccordement d'appareils commandés, **caractérisé en ce qu'**au moins trois blocs de sortie de données (3) sont sélectionnés dans le groupe comprenant un bloc de sortie de déchets (31) pour un élément chauffant de réservoir de déchets (310), une pompe
bloc de sortie (32) pour une pompe à eau (320), un ventilateur bloc de sortie (33) pour un ventilateur (330), un bloc de sortie d'alarme (34) pour une alarme (340), un bloc de sortie de chauffage (35) pour chauffage indépendant (350), un bloc de sortie de serrure (36) pour un contrôleur de serrure de porte (360), un bloc de sortie d'éclairage (37) pour un contrôleur d'état d'éclairage (370), et **en ce que** la technologie de communication sans fil de l'interface de communication le bloc (4) est une interface LPWA/GNSS (49).

2. Dispositif selon la revendication 1, **caractérisé en ce que** l'interface de communication bloc (4) comprend en outre au moins une technologie de communication sans fil sélectionnée du groupe comprenant une interface radio ISM (47) et une interface Bluetooth (48).

3. Dispositif selon la revendication 1 ou 2, **caractérisé en ce que** la communication le bloc d'interface (4) comprend l'interface radio ISM (47) à laquelle un capteur de pesée (471) pour mesurer le poids d'une bouteille de gaz est connecté sans fil.

4. Dispositif selon l'une quelconque des revendications 1 à 3, **caractérisé en ce que** le le bloc d'interface de communication (4) comprend l'interface radio ISM (47) à laquelle au moins un dispositif sélectionné dans le groupe comprenant un capteur de sécurité (472) pour un porte fermée, un capteur de refroidissement (473) pour mesurer la température dans un réfrigérateur, un capteur de température-humidité (474) pour mesurer la température, la pression et d'humidité, un capteur de gaz de fumée (475) pour mesurer la concentration de monoxyde de carbone et détection de fumée, une clé RFID (476) et entre un et dix universels sans fil commutateurs (477) est connecté.

5. Dispositif selon l'une quelconque des revendications précédentes, **caractérisé en ce que** la puissance le bloc d'alimentation (5) est relié à une alimentation basse tension (50) de 12V ayant une convertisseur 230/12V mis en oeuvre, dont l'alimentation est en outre connectée à un véhicule batterie (51), une alimentation secteur (52) et une batterie de loisirs (53), dans lequel le véhicule la batterie (51) est en outre connectée à l'unité de commande à microprocesseur (11) via la batterie bloc d'entrée (21) et un capteur de secteur (220) pour la présence de tension secteur est connecté à une sortie de l'alimentation secteur (52), lequel capteur est connecté à l'unité de commande à microprocesseur (11) via le bloc d'entrée secteur (22).

6. Dispositif selon l'une quelconque des revendications précédentes, **caractérisé en ce qu'**au moins un appareil mobile (480, 490) équipé d'une application mobile de communication, et/ou au moins un ordinateur distant (491) équipé d'un programme informatique et/ou une application Web de communication peut être connectée sans fil à l'interface Bluetooth (48) et/ou l'interface LPWA/GNSS (49).

7. Procédé de surveillance complexe d'objets d'habitation mobiles, **caractérisé en ce que** il comprend les étapes suivantes:
a. fournissant un dispositif de surveillance complexe d'objets d'habitation mobiles, le dispositif comprenant une unité de commande (1) incluant une unité de commande à microprocesseur (11) et au moins trois blocs d'entrée de données (2), au moins trois blocs de sortie de données (3), un bloc d'interface de communication (4), un bloc d'alimentation (5) et éventuellement un bloc de positionnement d'accéléromètre (6) connecté à celui-ci, dans lequel le le bloc d'interface de communication (4) comprend une communication sans fil technologie sous la forme d'une interface LPWA/GNSS (49) et d'au moins deux des interfaces de communication connectées à l'unité de commande à microprocesseur (11) et sélectionné dans le groupe comprenant un bus LIN-BUS (41) ayant un connecteur, un bus CAN-BUS (42) ayant un connecteur, un bus UART (43) ayant un connecteur, un bus USB (46) ayant un connecteur, un bus RS232 (44) ayant un connecteur et un bus RS485 (45) ayant un connecteur, et éventuellement en outre une interface radio ISM (47);
b. collecter des données d'entrée d'au moins un bloc d'entrée de données (2) et/ou d'au moins une interface de communication du bloc d'interface de communication (4) et/ou éventuellement du bloc de positionnement de l'accéléromètre (6) à la commande unité à microprocesseur (11);
c. transmettre sans fil les données d'entrée de la commande unité à microprocesseur (11) via l'interface LPWA/GNSS (49) à un message centre d'échange (492), et en outre à au moins un dispositif mobile (490) équipé d'une application mobile et/ou à au moins un ordinateur distant (491) équipé d'un programme informatique ou d'une application web;
d. afficher les données d'entrée dans le dispositif mobile (490) et/ou dans la télécommande ordinateur (491) et sur la base des données d'entrée, créer des données de sortie dans le mobile dispositif (490) au moyen de l'application mobile et/ou dans l'ordinateur distant (491) au moyen du programme informatique ou de l'application web;
e. transmettre sans fil les données de sortie du dispositif mobile (490) et/ou de l'ordinateur distant (491) vers le centre d'échange de messages (492), et en outre via l'interface LPWA/GNSS (49) au microprocesseur de commande unité (11); et
f. transmettre les données de sortie de l'unité de commande à microprocesseur (11) à au moins un bloc de sortie de données (3) et/ou à au moins une interface de communication du bloc d'interface de communication (4), activant ainsi au moins une sortie de données bloc (3) et/ou à au moins une interface de communication du bloc de communication bloc d'interface (4).

8. Procédé selon la revendication 7, **caractérisé en ce qu'**il comprend les étapes suivantes Pas:
a. fournir le dispositif de surveillance complexe d'objets d'habitation mobiles, dans lequel le bloc d'interface de communication (4) comprend en outre un technologie de communication sous la forme d'une interface Bluetooth (48);
c. transmettre sans fil les données d'entrée de la commande unité à microprocesseur (11) via l'interface Bluetooth (48) à au moins un mobile dispositif (480) équipé d'une application mobile;
e. transmettre sans fil les données de sortie du dispositif mobile (480) via l'interface Bluetooth (48) à l'unité de commande à microprocesseur (11); et

9. Procédé selon la revendication 7, **caractérisé en ce que** les données d'entrée et/ou les les données de sortie sont stockées dans une base de données (493), de préférence une base de données SQL, lorsqu'elles sont transmis sans fil entre le centre d'échange de messages (492) et l'ordinateur distant (491) dans les étapes c. et/ou e.

10. Procédé selon l'une quelconque des revendications 7 ou 9, **caractérisé en ce que** les données d'entrée selon l'étape b. de la revendication 7 comprennent en outre des données de positionnement du dispositif pour surveillance complexe d'objets de logement mobiles et sont transmises selon l'étape c. de la revendication 7.

11. Procédé selon l'une quelconque des revendications 7 à 10, **caractérisé en ce qu'**une demande de collecte de données d'entrée selon l'étape b. de la revendication 7 ou 8, ou éventuellement de la revendication 10 est transmis de manière sans fil avant l'étape b. de la revendication 7 à partir du dispositif mobile (490) et/ou de l'ordinateur distant (491) au centre d'échange de messages (492), et en outre via l'interface LPWA/GNSS (49) vers l'unité de commande à microprocesseur (11), ou avant l'étape b. selon la revendication 8 depuis le dispositif mobile (480) via l'interface Bluetooth (48) à l'unité de commande à microprocesseur (11).

12. Procédé selon l'une quelconque des revendications 7 à 10, **caractérisé en ce que** la transmission des données d'entrée selon l'étape c. de la revendication 7 ou 8, ou éventuellement de la revendication 10, est effectué automatiquement périodiquement ou à condition que les données d'entrée incluent un avertissement signal du mode d'urgence.

13. Procédé selon l'une quelconque des revendications 7 à 12, **caractérisé en ce que** l'entrée de données blocs (2) sont sélectionnés dans le groupe comprenant un bloc d'entrée de batterie (21) pour le état d'une batterie de véhicule (51), un bloc d'entrée secteur (22) pour la présence de secteur tension, un bloc d'entrée solaire (23) pour la présence de tension du panneau solaire, un allumage bloc d'entrée (24) pour l'état d'une clé de contact, un bloc d'entrée d'éclairage (25) pour l'état d'éclairage, un bloc d'entrée d'alarme (26) pour la signalisation d'alarme, un bloc d'entrée de température (27) pour mesurer la température externe et interne, un bloc d'entrée de réservoir d'eau (28) pour les niveaux des eaux propres et usées, dans lequel les blocs de sortie de données (3) sont sélectionnés dans le groupe comprenant un déchet bloc de sortie (31) pour un élément chauffant de réservoir à déchets (310), un bloc de sortie de pompe (32) pour une pompe à eau (320), un bloc de sortie de ventilateur (33) pour un ventilateur (330), une alarme bloc de sortie (34) pour une alarme (340), un bloc de sortie chauffage (35) pour chauffage (350), un bloc de sortie de serrure (36) pour un contrôleur de serrure de porte (360), une sortie d'éclairage bloc (37) pour un contrôleur d'état d'éclairage (370), dans lequel si ledit bus (41-45) ou l'interface radio ISM (47) est présent, l'un quelconque des éléments chauffants( 411 ), la climatisation (412) et/ou une chaudière (413) est connectée au bus LIN-BUS (41), dans lequel l'un parmi un capteur d'air (421) pour l'état de l'air extérieur, un panneau tactile (422) et/ou une interface d'accès infrarouge (423) est connectée au bus CAN-BUS (42), dans lequel l'un quelconque parmi un récepteur de navigation (431) et/ou une unité de chauffage (432) est connecté à l'UART bus (43), dans lequel une unité d'affichage tactile (440) est connectée au bus RS232 (44), dans lequel une alimentation électrique (450) est connectée au bus RS485 (45), dans lequel l'un quelconque d'un capteur de pesée (471) pour mesurer le poids d'une bouteille de gaz, au moins un capteur de sécurité capteur (472) pour une porte fermée, un capteur de refroidissement (473) pour mesurer la température dans un réfrigérateur, un capteur de température-humidité (474) pour mesurer la température, de pression et d'humidité, un capteur de gaz de fumée (475) pour mesurer le monoxyde de carbone concentration et détection de fumée, une clé RFID (476) et un interrupteur sans fil universel (477) est connecté à l'interface radio ISM (47).

14. Un programme d'ordinateur [produit] comprenant des instructions qui, lorsque le programme est exécutées par un appareil mobile (480, 490) et/ou un ordinateur distant (491), provoquent la dispositif de surveillance complexe d'objets d'habitation mobiles en combinaison avec le dispositif mobile (480, 490) et/ou l'ordinateur distant (491) pour effectuer les étapes b. à f. du procédé selon la revendication 7 ou 8, et éventuellement les étapes b. à f. de la procédé selon l'une quelconque des revendications 9 à 13.

15. Un support de données lisible par ordinateur ou un signal de celui-ci, sur lequel est stocké ou portant le programme d'ordinateur [produit] selon la revendication 14.
